# EUROPEAN PATENT SPECIFICATION

(11) **EP 1 230 836 B1**
(45) Date of publication and mention of the grant of the patent: **22.11.2006**
(21) Application number: 02250089.6
(22) Date of filing: 08.01.2002
(51) Int. Cl.: A01D 34/71

(54) **Collection receptacle**
Sammelbehälter
Récipient collecteur

(30) Priority: 09.01.2001 GB 0100534; 23.05.2001 GB 0112642
(43) Date of publication of application: 14.08.2002
(73) Proprietor: Husqvarna UK Limited, County Durham, DL5 6UP (GB)
(72) Inventor: Zwolinski, Paul, Northallerton, North Yorkshire DL7 8FE (GB); Mutton, Leonard, County Durham DL5 6TB (GB)
(74) Representative: Pratt, David Martin

(56) References cited:
- EP-A- 0 253 231
- EP-A- 0 726 182
- DE-U- 9 111 827
- FR-A- 2 237 564
- GB-A- 2 356 121
- US-A- 4 745 735
- US-A- 4 922 696
- PATENT ABSTRACTS OF JAPAN vol. 1995, no. 03, 28 April 1995 (1995-04-28) & JP 06 343320 A (ISEKI & CO LTD), 20 December 1994 (1994-12-20)

## Description

This invention relates to a receptacle for collecting debris such as grass cuttings, and in particular to a grass box for a grass cutting machine such as a lawnmower, see e.g. FR-A-2 237 564.

There are two main types of lawnmower currently in production, namely a machine which is supported, relative to ground datum, by wheels, rollers or a combination of both (commonly called a wheeled rotary machine), and a machine which is supported by a cushion of air (commonly called a hover mower). In either case, the machine includes either a cutting blade rotatable about an axis which is substantially vertical relative to ground datum, or a cutting system having a cylindrical cutting unit which includes a plurality of blades, and which, in use, is rotatable about an axis which is substantially parallel to ground datum. In either case, the cutting system may be powered by an electric motor or an internal combustion engine. Finally, a lawnmower can be either of the collecting or non-collecting type, that is say that it may be provided with a grass collection receptacle (grass box) for collecting cut grass, or cut grass may be allowed to fall to the ground to act as a mulch.

For machines of the collecting type, it is important, for a number of reasons, for the user to know when the grass box is full and is unable to take any more clippings. Firstly, it is important because the receptacle has to be emptied when full. Secondly, when the grass box is not emptied, grass will be left on the ground behind the lawnmower. Thirdly, depending on the design of the lawnmower, grass that cannot be sent to the grass box because the grass box is full has a tendency to clog around the cutting system, which results in a poor quality of cut, giving an untidy appearance to a cut lawn.

There already exists a number of devices for indicating when a grass box is full. However, all the known devices are susceptible to becoming ineffective in use. This is because known devices are all reliant upon the relative motion of components which are actuated under the influence of a change of air pressure or air flow. Such devices have a tendency to become ineffective due to contamination of the air flow by the grass clippings, particularly when these are wet. Thus, wet debris tends to stick to the surface of such a moving component, altering its dynamic properties, or blocking any openings that may be present in the design. This contamination can result in devices of this type becoming inoperative.

The aim of the invention is to provide a grass collection receptacle which is more effective than known devices.

The present invention provides a receptacle for collecting debris, the receptacle being provided with a transparent panel positioned in a wall of the receptacle and in general alignment with a predetermined level of filling of the receptacle with debris, and with a deflector for deflecting an air stream within the receptacle away from the transparent panel.

Advantageously, the predetermined level is a level indicating that the receptacle is full.

Preferably, the transparent panel is fixed within an aperture formed in said wall. Alternatively, the transparent panel is detachably mounted in an aperture formed in said wall.

In a preferred embodiment, the transparent panel is made of a thermoplastics material such as ABS, SAN, polycarbonate or acrylic.

Advantageously, the transparent panel is positioned in general alignment with said predetermined level from the viewpoint of the user of the lawnmower.

Conveniently, the receptacle is a grass box for a lawnmower, the transparent panel being provided in a rear wall of the grass box so as to be readily visible to a user of a lawnmower associated with the grass box. Alternatively, the transparent panel is provided in a lid of the grass box so as to be readily visible to a user of a lawnmower associated with the grass box. In the latter case, the lid may form part of a housing of the lawnmower, and the grass box may be open-topped and positioned within the housing. Preferably, the transparent panel extends substantially the entire width of the lid.

Preferably, an edge portion of the transparent panel is formed with an internally-extending, wedge-shaped projection which tapers towards the adjacent edge of the panel, the projection constituting the deflector. Where the panel is in the rear wall of the grass box, the wedge-shaped projection is formed at the lower edge portion of the transparent panel, and tapers towards the lowest portion of the panel; and, where the panel is in the lid, the panel has a generally L-shaped cross-section, one portion of which lies substantially parallel to the plane of the lid, the other portion of which lies generally at right-angles to the lid, and the wedge-shaped projection is positioned at the lower edge portion of said other panel portion, and tapers towards the lowest portion of the panel.

In another preferred embodiment, the receptacle further comprises a lift-out grass container positioned within the grass box, the deflector being provided on the container in such a position as to deflect grass clippings carried by said air stream away from the transparent panel.

Several forms of lawnmower grass box, each of which is constructed in accordance with the invention, will now be described, by way of example, with reference to the drawings, in which:-
Figure 1 is a perspective view of a first-form of the grass box and an associated hover mower;
Figure 2 is a cross-section, on an enlarged scale, taken on the line II-II of Figure 1;
Figure 3 is a perspective of a second form of grass box and an associated hover mower;
Figure 4 is a cross-section, on an enlarged scale, taken on the line IV-IV of Figure 3;
Figure 5 is a perspective view of a third form of grass box and an associated wheeled rotary lawnmower;
Figure 6 is a cross-section, on an enlarged scale, taken on the line VI-VI of Figure 5; and
Figure 7 is a cross-section showing the top, rear portion of a fourth form of grass box.

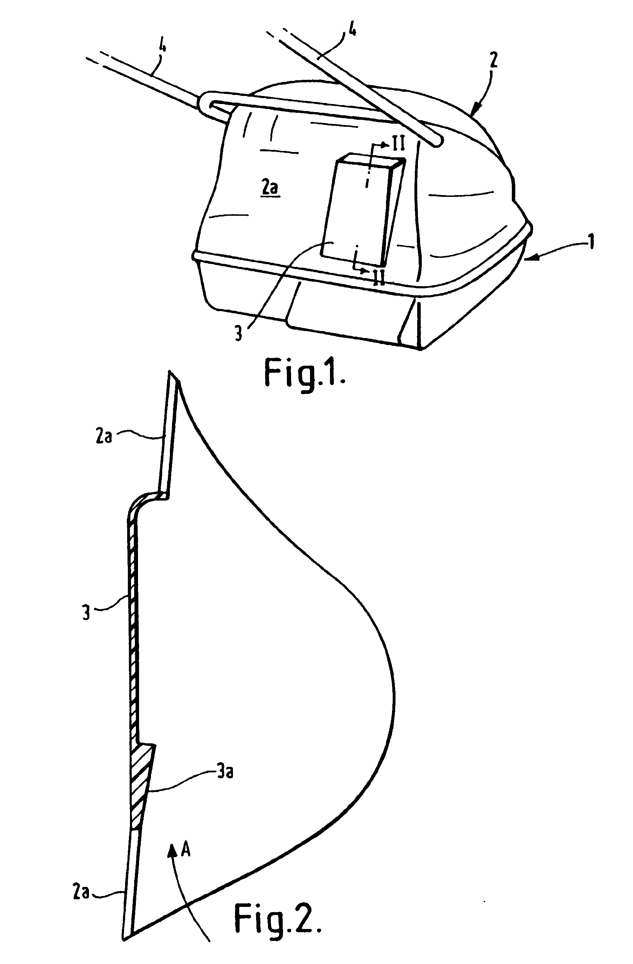

Referring to the drawings, Figure 1 shows a hover mower, indicated generally by the reference numeral 1, provided with a grass box 2. The grass box 2 is provided in its rear wall 2a, with a transparent panel 3. The transparent panel 3 is positioned towards the top of the grass box 2 to enable to user of the mower to see inside the grass box while it is filling, and so that the user can easily see when the grass box approaches the full state. The transparent panel 3 is positioned in the rear wall 2a of the grass box 2 so that the user can see the panel, and into the interior of the grass box, whilst operating the lawn mower 1 in the normal position using handles 4.

Figure 2 shows a cross-section through the panel 3 which is positioned in an aperture 2b formed in the rear wall 2a of the grass box 2. The panel 3 is formed with a deflection ramp 3a along its lower edge. The deflection ramp 3a is positioned such that the stream of air, indicated by the arrow A, which carries grass clippings from the cutting system (not shown) of the hover mower 1 is deflected away from the panel 3, thereby preventing the panel becoming contaminated with grass clippings, particularly when these are wet.

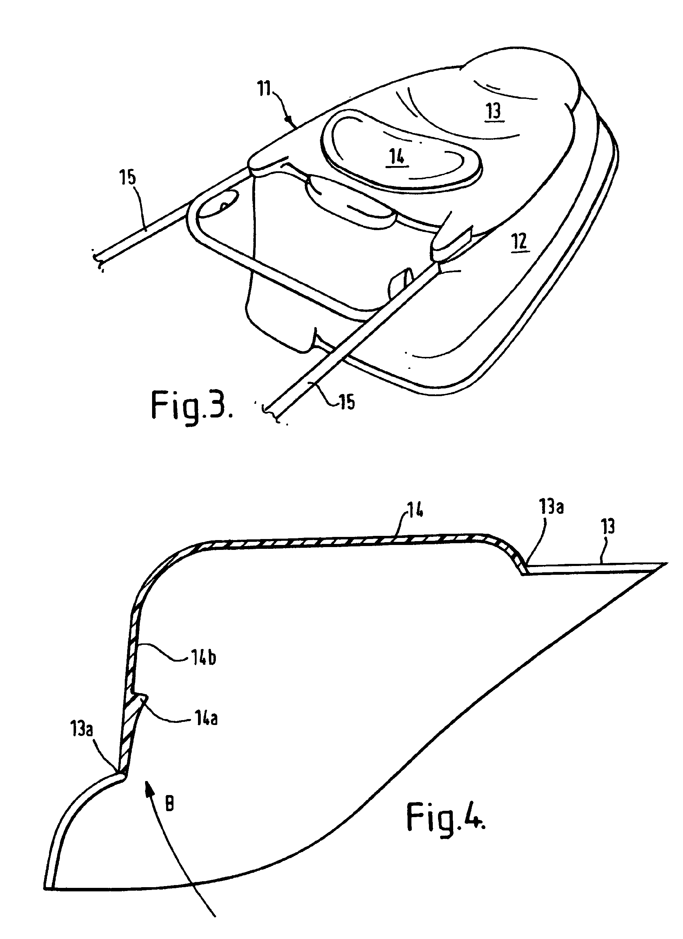

Figure 3 shows a hover mower 11 having a body 12 which houses a grass box (not shown). A lid 13 is pivotally attached to the body 12 so as to overlie the grass box. A transparent panel 14 is provided in the lid 13, the transparent panel being positioned towards the rear of the lid 13 to enable the user of the mower 1 to see inside the grass box while it is filling, and so that the user can easily see when the grass box approaches the full state. The transparent panel 14 is positioned so that the user can see the panel, and into the interior of the grass box, whilst operating the mower 11 in the normal position using handles 15. Moreover, the panel 14 extends substantially the entire width of the lid 13, thereby affording the user of the mower 11 a good and clear view of the interior of the grass box.

Figure 4 shows a cross-section through the panel 14 which is positioned in an aperture 13a formed in the lid 13. The panel 14 is formed with a deflection ramp 14a along its rear, upwardly-extending edge 14b. The deflection ramp 14a is positioned such that the stream of air, indicated by the arrow B, which carries grass clippings from the cutting system (not shown) of the mower 11 is deflected away from the panel 14, thereby preventing the panel becoming contaminated with grass clippings, particularly when these are wet.

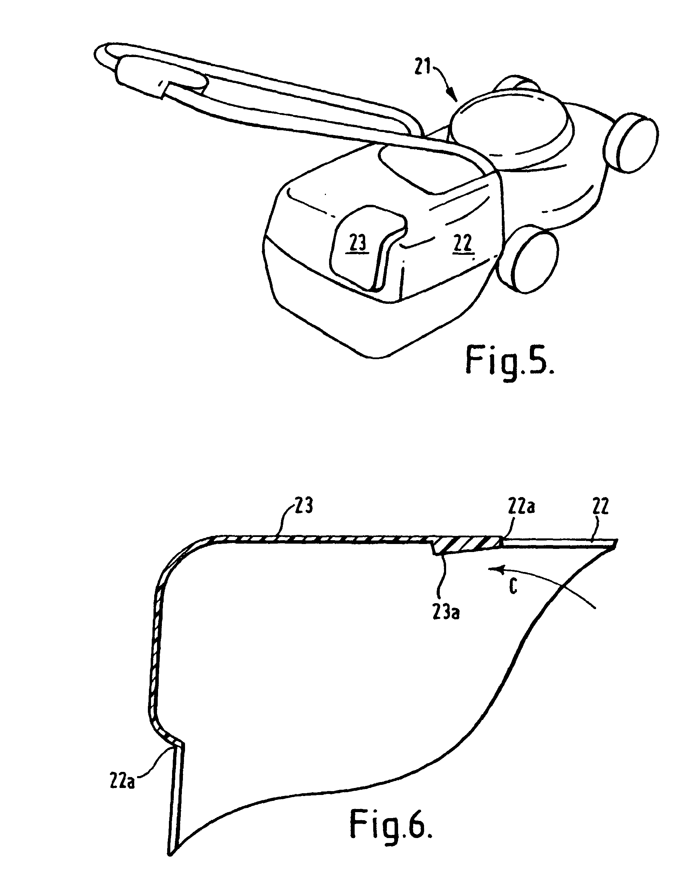

Figure 5 shows a wheeled rotary mower 21 provided with a grass box 22 at its rear. An L-shaped transparent panel 23 is positioned at the rear of the grass box 22, the panel being positioned within an aperture 22a formed in the top and rear walls thereof. As with the earlier embodiments, the panel 23 is positioned to enable the user of the mower 21 to see inside the grass box while it is filling, whilst operating the mower in the normal position using handles 24.

Figure 6 shows a cross-section through the panel 23, the panel being formed with a deflection ramp 23a positioned at its leading edge, that is to say in such a position that the stream of air, indicated by the arrow C, which carries grass clippings from the cutting system (not shown) of the mower 21 is deflected away from the panel, thereby preventing the panel becoming contaminated with grass clippings, particularly when these are wet.

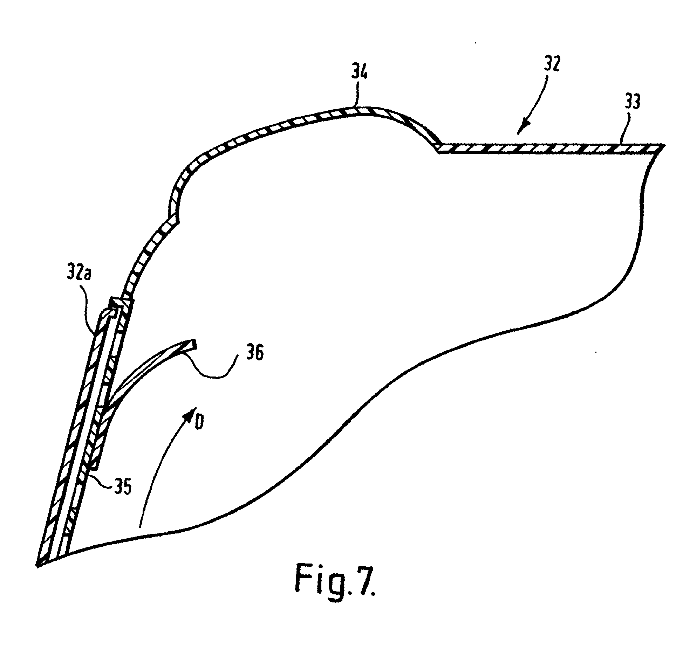

Figure 7 shows the top rear portion of a modified form of grass box 32. The grass box 32 has an outer casing 32a provided with a lid 33, the lid being pivotally attached to the casing at the front end (not shown) thereof. A transparent panel 34 is formed in the lid towards the rear end thereof. A perforated lift-out basket 35 is positioned, in use, within the outer casing 32a of the grass box 32. A curved deflection ramp 36 is provided within the basket 35 at the upper end portion of its rear wall, the deflection ramp being positioned such that the stream of air, indicated by the arrow D, which carries grass clippings from the cutting system of the associated mower (not shown) is deflected away from the panel 34, thereby preventing the panel becoming contaminated with grass clippings, particularly when these are wet.

Each of the panels 3, 14, 23 and 34 is manufactured from a transparent grade of thermoplastics material, such as ABS, SAN, polycarbonate or acrylic; and each panel could be produced by injection moulding or by vacuum forming.

It will be apparent that modifications could be made to each of the grass boxes described above. For example, its transparent panel 3, 14, 23 and 34 may be removably mounted in its aperture. This would permit the user to remove the transparent panel 3, 14, 23 and 34 for cleaning, after extended use, either using water or by brushing. Moreover, in the first three embodiments the deflector 3a, 14a, or 23a could be positioned on, or form part of, the associated grass box rather than as part of the associated transparent panel 3, 14 or 23. In this case, the relevant deflector would be positioned to deflect grass clippings carried by the stream of air generated by the associated mower away from the associated transparent panel 3, 14 or 23.

## Claims

1. A receptacle for collecting debris, the receptacle being provided with a transparent panel positioned in a wall of the receptacle and in general alignment with a predetermined level of filling of the receptacle with debris, and with a deflector for deflecting an air stream within the receptacle away from the transparent panel.

2. A collection receptacle as claimed in claim 1, wherein the predetermined level is a level indicating that the receptacle is full.

3. A collection receptacle as claimed in claim 1 or claim 2, wherein the transparent panel is fixed within an aperture formed in said wall.

4. A collection receptacle as claimed in claim 1 or claim 2, wherein the transparent panel is detachably mounted in an aperture formed in said wall.

5. A collection receptacle as claimed in any one of claims 1 to 4, wherein the transparent panel is made of a thermoplastics material such as ABS, SAN, polycarbonate or acrylic.

6. A collection receptacle as claimed in any one of claims 1 to 5, wherein the transparent panel is positioned in general alignment with said predetermined level from the viewpoint of a user of a lawnmower associated with the receptacle.

7. A collection receptacle as claimed in any one of claims 1 to 6, wherein the transparent panel is provided in a rear wall of the receptacle so as to be readily visible to a user of a lawnmower associated with the receptacle.

8. A collection receptacle as claimed in any one of claims 1 to 6, wherein the transparent panel is provided in a top wall of the receptacle so as to be readily visible to a user of a lawnmower associated with the receptacle.

9. A collection receptacle as claimed in any one of claims 1 to 8, wherein the receptacle is a grassbox for attachment to a lawnmower.

10. A collection receptacle as claimed in claim 8, wherein the lid forms part of a housing of the lawnmower, and the receptacle further comprises an open-topped container positioned within the housing.

11. A collection receptacle as claimed in claim 8 or claim 10, wherein the transparent panel extends substantially the entire width of the lid.

12. A collection receptacle as claimed in any one of claims 1 to 11, wherein an edge portion of the transparent panel is formed with an internally-extending, wedge-shaped projection which tapers towards the adjacent edge of the panel, the projection constituting the deflector.

13. A collection receptacle as claimed in claim 12 when appendant to claim 7, wherein the wedge-shaped projection is formed at the lower edge portion of the transparent panel, and tapers towards the lowest portion of the panel.

14. A collection receptacle as claimed in claim 12 when appendant to claim 8 or claim 10, wherein the transparent panel has a generally L-shaped cross-section, one portion of which lies substantially parallel to the plane of the lid, the other portion of which lies generally at right-angles to the lid, and wherein the wedge-shaped projection is positioned at the lower edge portion of said other panel portion, and tapers towards the lowest portion of the panel.

15. A collection receptacle as claimed in claim 10, wherein the deflector is provided on the container in such a position as to deflect grass clippings carried by said air stream away from the transparent panel.

## Patentansprüche

1. Behälter zum Aufsammeln von Gegenständen, wobei der Behälter mit einer transparenten Platte, welche in einer Wand des Behälters positioniert ist und sich in normaler Ausrichtung mit einem vorbestimmten Füllstand des Behälters mit Gegenständen befindet, und einer Ablenkeinrichtung zum Ablenken eines Luftstroms innerhalb des Behälters von der transparenten Platte weg gerichtet versehen ist.

2. Sammelbehälter nach Anspruch 1, wobei der vorbestimmte Füllstand einen Füllstand darstellt, welcher anzeigt, dass der Behälter voll ist.

3. Sammelbehälter nach Anspruch 1 oder 2, wobei die transparente Platte innerhalb einer in der Wand gebildeten Öffnung fest angebracht ist.

4. Sammelbehälter nach Anspruch 1 oder 2, wobei die transparente Platte in einer in der Wand gebildeten Öffnung lösbar angebracht ist.

5. Sammelbehälter nach einem der Ansprüche 1 bis 4, wobei die transparente Platte aus einem Material aus Thermoplasten besteht, wie beispielsweise ABS, SAN, Polykarbonat oder Acryl.

6. Sammelbehälter nach einem der Ansprüche 1 bis 5, wobei die transparente Platte sich aus Sicht eines Benutzers eines mit dem Behälter gekoppelten Rasenmähers in normaler Ausrichtung mit dem vorbestimmten Füllstand befindet.

7. Sammelbehälter nach einem der Ansprüche 1 bis 6, wobei die transparente Platte in einer Rückwand des Behälters vorgesehen ist, um für einen Benutzer eines mit dem Behälter gekoppelten Rasenmähers leicht sichtbar zu sein.

8. Sammelbehälter nach einem der Ansprüche 1 bis 6, wobei die transparente Platte in einer Decke des Behälters vorgesehen ist, um für einen Benutzer eines mit dem Behälter gekoppelten Rasenmähers leicht sichtbar zu sein.

9. Sammelbehälter nach einem der Ansprüche 1 bis 8, wobei der Behälter ein Grasfangkorb zur Befestigung an einem Rasenmäher ist.

10. Sammelbehälter nach Anspruch 8, wobei der Deckel einen Teil eines Gehäuses des Rasenmähers bildet und der Behälter zudem einen Behälter mit einer offenen Oberseite aufweist, welcher innerhalb des Gehäuses positioniert ist.

11. Sammelbehälter nach Anspruch 8 oder 10, wobei sich die transparente Platte im Wesentlichen entlang der gesamten Breite des Deckels erstreckt.

12. Sammelbehälter nach einem der Ansprüche 1 bis 11, wobei ein Kantenabschnitt der transparenten Platte mit einem sich innen erstreckenden, keilförmigen Vorsprung gebildet ist, welcher sich zur angrenzenden Kante der Platte verjüngt, wobei der Vorsprung die Ablenkfläche bildet.

13. Sammelbehälter nach Anspruch 12, wenn zu Anspruch 7 zugehörig, wobei der keilförmige Vorsprung am unteren Kantenabschnitt der transparenten Platte gebildet ist und sich zum untersten Abschnitt der Platte hin verjüngt.

14. Sammelbehälter nach Anspruch 12, wenn zu Anspruch 8 oder 10 zugehörig, wobei die transparente Platte einen im Allgemeinen L-förmigen Querschnitt aufweist, von welchem ein Abschnitt im Wesentlichen parallel zur Ebene des Deckels und der andere Abschnitt im Allgemeinen in rechten Winkeln zum Deckel liegt, und wobei der keilförmige Vorsprung am unteren Kantenabschnitt des anderen Plattenabschnitts positioniert ist und sich zum untersten Abschnitt der Platte hin verjüngt.

15. Sammelbehälter nach Anspruch 10, wobei die Ablenkfläche in solch einer Stellung auf dem Behälter vorgesehen ist, um durch den Luftstrom getragene Grasabfälle von der transparenten Platte wegzulenken.

## Revendications

1. Récipient destiné à la collecte de détritus, le récipient étant muni d'un panneau transparent positionné sur une paroi du récipient et dans l'ensemble en alignement avec un niveau prédéterminé de remplissage du récipient par les détritus, et avec un déflecteur destiné à détourner du panneau transparent un flux d'air à l'intérieur du récipient.

2. Récipient collecteur selon la revendication 1, dans lequel le niveau prédéterminé est un niveau indiquant que le récipient est plein.

3. Récipient collecteur selon la revendication 1 ou la revendication 2, dans lequel le panneau transparent est fixé dans une ouverture pratiquée dans ladite paroi.

4. Récipient collecteur selon la revendication 1 ou la revendication 2, dans lequel le panneau transparent est monté de façon amovible dans une ouverture pratiquée dans ladite paroi.

5. Récipient collecteur selon l'une quelconque des revendications 1 à 4, dans lequel le panneau transparent est fabriqué dans un matériau thermoplastique tel que l'ABS, le SAN, un polycarbonate ou une résine acrylique.

6. Récipient collecteur selon l'une quelconque des revendications 1 à 5, dans lequel le panneau transparent est positionné dans l'ensemble en alignement avec ledit niveau prédéterminé du point de vue d'un utilisateur d'une tondeuse à gazon associée au récipient.

7. Récipient collecteur selon l'une quelconque des revendications 1 à 6, dans lequel le panneau transparent est disposé sur une paroi arrière du récipient de façon à être facilement visible pour un utilisateur d'une tondeuse à gazon associée au récipient.

8. Récipient collecteur selon l'une quelconque des revendications 1 à 6, dans lequel le panneau transparent est disposé sur une paroi supérieure du récipient de façon à être facilement visible pour un utilisateur d'une tondeuse à gazon associée au récipient.

9. Récipient collecteur selon l'une quelconque des revendications 1 à 8, dans lequel le récipient est un panier à herbe destiné à être fixé à une tondeuse à gazon.

10. Récipient collecteur selon la revendication 8, dans lequel le couvercle forme une partie du carter de la tondeuse à gazon, et où le récipient comprend en outre un conteneur à sommet ouvert placé à l'intérieur du carter.

11. Récipient collecteur selon la revendication 8 ou la revendication 10, dans lequel le panneau transparent s'étend sensiblement sur la totalité de la largeur du couvercle.

12. Récipient collecteur selon l'une quelconque des revendications 1 à 11, dans lequel une partie du bord du panneau transparent est formée avec une saillie en forme de coin s'étendant à l'intérieur qui s'amincit en direction du bord adjacent du panneau, la saillie constituant le déflecteur.

13. Récipient collecteur selon la revendication 12 si ajoutée à la revendication 7, dans lequel la saillie en forme de coin est formée sur la partie du bord inférieur du panneau transparent, et s'amincit en direction de la partie la plus basse du panneau.

14. Récipient collecteur selon la revendication 12 si ajoutée à la revendication 8 ou à la revendication 12, dans lequel le panneau transparent présente une section transversale dans l'ensemble en forme de L, dont une partie se trouve sensiblement parallèle au plan du couvercle, et dont une autre partie se trouve dans l'ensemble perpendiculaire au plan du couvercle, et dans lequel la saillie en forme de coin est positionnée sur la partie inférieure du bord de ladite autre partie du panneau, et s'amincit en direction de la partie la plus basse du panneau.

15. Récipient collecteur selon la revendication 10, dans lequel le déflecteur est disposé dans le conteneur à un emplacement tel qu'il détourne du panneau transparent les herbes coupées transportées par ledit flux d'air.
